(19) Europäisches Patentamt
European Patent Office
Office européen des brevets

(11) **EP 4 700 847 A1**

(12) **EUROPEAN PATENT APPLICATION**

(43) Date of publication:
**25.02.2026 Bulletin 2026/09**

(21) Application number: **25196931.7**

(22) Date of filing: **20.08.2025**

(51) International Patent Classification (IPC):
$H01M\ 4/133^{(2010.01)}$  $H01M\ 4/36^{(2006.01)}$
$H01M\ 4/587^{(2010.01)}$  $H01M\ 10/0525^{(2010.01)}$
$H01M\ 10/0585^{(2010.01)}$  $H01M\ 10/0587^{(2010.01)}$
$H01M\ 4/02^{(2006.01)}$  $H01M\ 4/1393^{(2010.01)}$

(52) Cooperative Patent Classification (CPC):
**H01M 4/366; H01M 4/133; H01M 4/587;**
**H01M 10/0525;** H01M 4/1393; H01M 10/0585;
H01M 10/0587; H01M 2004/021; H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **20.08.2024 KR 20240111521**

(71) Applicant: **SAMSUNG SDI CO., LTD.**
**Yongin-si, Gyeonggi-do 17084 (KR)**

(72) Inventors:
• **EOM, Hye Ri**
 **Suwon-si, Gyeonggi-do 16678 (KR)**
• **SUH, Soon Sung**
 **Suwon-si, Gyeonggi-do 16678 (KR)**
• **DO, Ui Song**
 **Suwon-si, Gyeonggi-do 16678 (KR)**
• **IN, Jin Hyuk**
 **Suwon-si, Gyeonggi-do 16678 (KR)**
• **PARK, Jeong Hoon**
 **Suwon-si, Gyeonggi-do 16678 (KR)**
• **LEE, Dong Hun**
 **Suwon-si, Gyeonggi-do 16678 (KR)**

(74) Representative: **Marks & Clerk LLP**
**15 Fetter Lane**
**London EC4A 1BW (GB)**

(54) **NEGATIVE ELECTRODE FOR RECHARGEABLE LITHIUM BATTERY AND RECHARGEABLE LITHIUM BATTERY INCLUDING THE SAME**

(57)    A negative electrode for a rechargeable lithium battery includes a current collector and a negative electrode active material layer formed on at least one surface of the current collector, wherein the negative electrode active material layer includes a first negative electrode active material layer and a second negative electrode active material layer, which are sequentially arranged on the current collector, and satisfies Expression 1:

Expression 1

Average inclination angle of first negative electrode active material layer < Average inclination angle of second negative electrode active material layer.

Also disclosed is a rechargeable lithium battery including the negative electrode.

EP 4 700 847 A1

FIG 2.

**EP 4 700 847 A1**

**Description**

**BACKGROUND**

**1. Field**

The present invention relates to a negative electrode for a rechargeable lithium battery, and a rechargeable lithium battery including the same.

**2. Description of the Related Art**

Recently, with the rapid spread of electronic devices that use batteries, such as mobile phones, laptop computers, electric vehicles, and/or the like, the demand for rechargeable batteries with high energy density and high capacity has been increasing significantly. In response, research and development to improve the performance of such rechargeable batteries, particularly rechargeable lithium batteries, is actively ongoing.

A rechargeable lithium battery generally includes a positive electrode and a negative electrode, each of which includes an active material that is capable of intercalating and deintercalating lithium ions, and an electrolyte. Electrical energy is generated by oxidation and reduction reactions when lithium ions are intercalated/deintercalated into/from the positive electrode and the negative electrode. For example, the electrical energy is generated when lithium ions are intercalated into the positive electrode and/or deintercalated from the negative electrode during the discharge process.

**SUMMARY**

One or more aspects of the present invention are directed toward a negative electrode for a rechargeable lithium battery, which has high adhesion of an active material layer to a current collector and enables fast charging.

One or more aspects of the present invention are directed toward a rechargeable lithium battery, which includes the negative electrode for a rechargeable lithium battery.

Additional aspects will be set forth in part in the description which follows and, in part, will be apparent from the description, or may be learned by practice of the presented embodiments of the disclosure.

According to a first aspect of the present invention there is provided a negative electrode for a rechargeable lithium battery, the negative electrode including: a current collector; and a negative electrode active material layer on (e.g., formed on) at least one surface of the current collector, wherein the negative electrode active material layer includes a first negative electrode active material layer and a second negative electrode active material layer, which are sequentially arranged on the current collector, and satisfies Expression 1:

Average inclination angle of first negative electrode active material layer < Average inclination angle of second negative electrode active material layer        Expression 1

According to a second aspect of the present invention there is provided a rechargeable lithium battery that includes the negative electrode; and a positive electrode.

The negative electrode for a rechargeable lithium battery according to one or more embodiments may have high adhesion to the current collector and provide high fast-charging performance.

At least some of the above and other features of the invention are set out in the claims.

**BRIEF DESCRIPTION OF DRAWINGS**

The accompanying drawings are included to provide a further understanding of the disclosure, and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.

FIG. 1 is a schematic cross-sectional view of a negative electrode for a rechargeable lithium battery according to one or more embodiments of the present disclosure.
FIG. 2 is a schematic cross-sectional view of a negative electrode for a rechargeable lithium battery according to one or more embodiments of the present disclosure.
FIG. 3A shows an example of inclination angles of a first negative electrode active material layer and a second

3

negative electrode active material layer before rolling according to one or more embodiments of the present disclosure, wherein the X-axis (lateral axis) represents inclination angle (the unit is °) and the Y-axis (vertical axis) represents an amount ratio of active materials having the inclination angle (the unit is wt%), the black bars (■) represent a second negative electrode active material layer, and the white bars (□) represent a first negative electrode active material layer. The value "~10°"might means that the range of the inclination angle or the range of the average inclination angle is "greater than 0 and less than or equal to 10°.

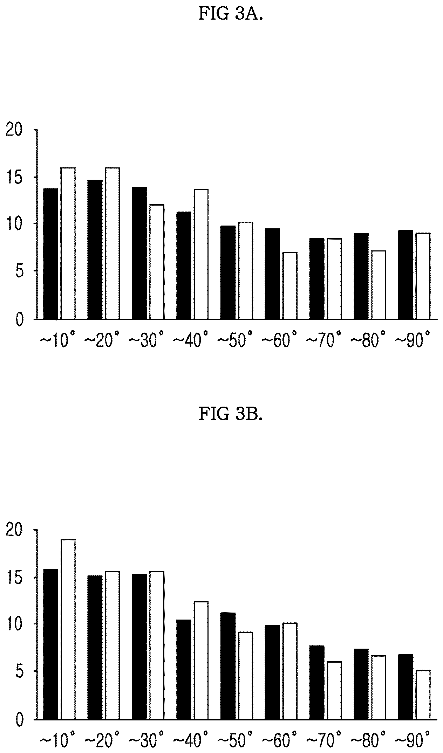

FIG. 3B shows an example of inclination angles of a first negative electrode active material layer and a second negative electrode active material layer according to one or more embodiments of the present disclosure, wherein the X-axis (lateral axis) represents inclination angle (the unit is °) and the Y-axis (vertical axis) represents an amount ratio of active materials having the inclination angle (the unit is wt%), the black bars (■) represent a second negative electrode active material layer, and the white bars (□) represent a first negative electrode active material layer. The value "~10°" might means that the range of the inclination angle or the range of the average inclination angle is "greater than 0 and less than or equal to 10°.

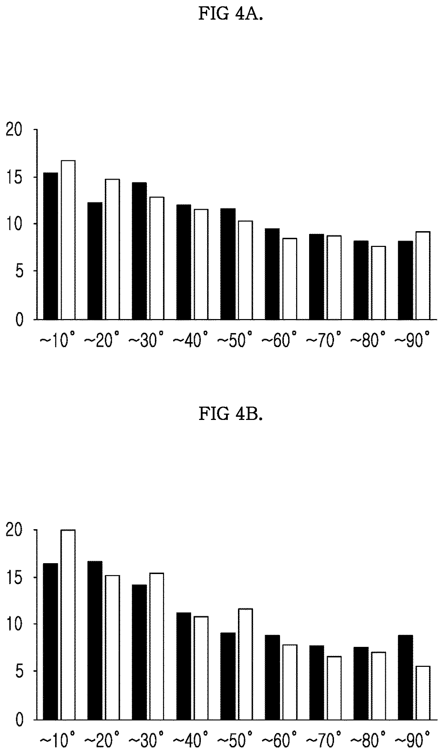

FIG. 4A shows another example of inclination angles of a first negative electrode active material layer and a second negative electrode active material layer before rolling according to one or more embodiments of the present disclosure, wherein the X-axis (lateral axis) represents inclination angle (the unit is °) and the Y-axis (vertical axis) represents an amount ratio of active materials having the inclination angle (the unit is wt%), the black bars (■) represent a second negative electrode active material layer, and the white bars (□) represent a first negative electrode active material layer. The value "~10°" might means that the range of the inclination angle or the range of the average inclination angle is "greater than 0 and less than or equal to 10°.

FIG. 4B shows another example of inclination angles of a first negative electrode active material layer and a second negative electrode active material layer according to one or more embodiments of the present disclosure, wherein the X-axis (lateral axis) represents inclination angle (the unit is °) and the Y-axis (vertical axis) represents an amount ratio of active materials having the inclination angle (the unit is wt%), the black bars (■) represent a second negative electrode active material layer, and the white bars (□) represent a first negative electrode active material layer. The value "~10°" might means that the range of the inclination angle or the range of the average inclination angle is "greater than 0 and less than or equal to 10°.

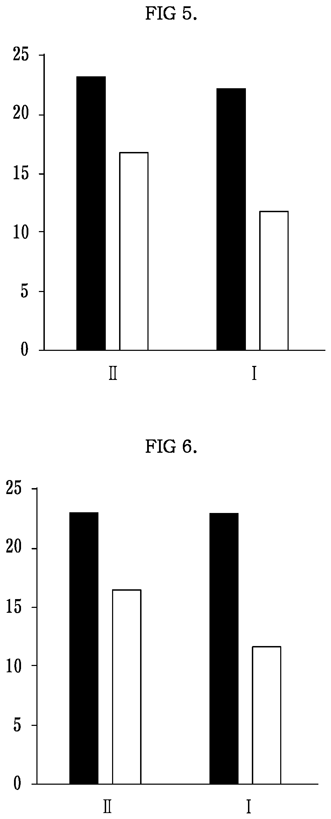

FIG. 5 shows an example of the change in porosity of a first negative electrode active material layer and a second negative electrode active material layer before and after rolling according to one or more embodiments of the present disclosure, wherein I represents a result for a first negative electrode active material layer, II represents a result for a second negative electrode active material layer, the Y-axis (vertical axis) represents porosity, the black bars (■) represent a result before rolling, and the white bars (□) represent a result after rolling.

FIG. 6 shows another example of the change in porosity of a first negative electrode active material layer and a second negative electrode active material layer before and after rolling according to one or more embodiments of the present disclosure, wherein I represents a result for a first negative electrode active material layer, II represents a result for a second negative electrode active material layer, the Y-axis (vertical axis) represents porosity, the black bars (■) represent a result before rolling, and the white bars (□) represent a result after rolling.

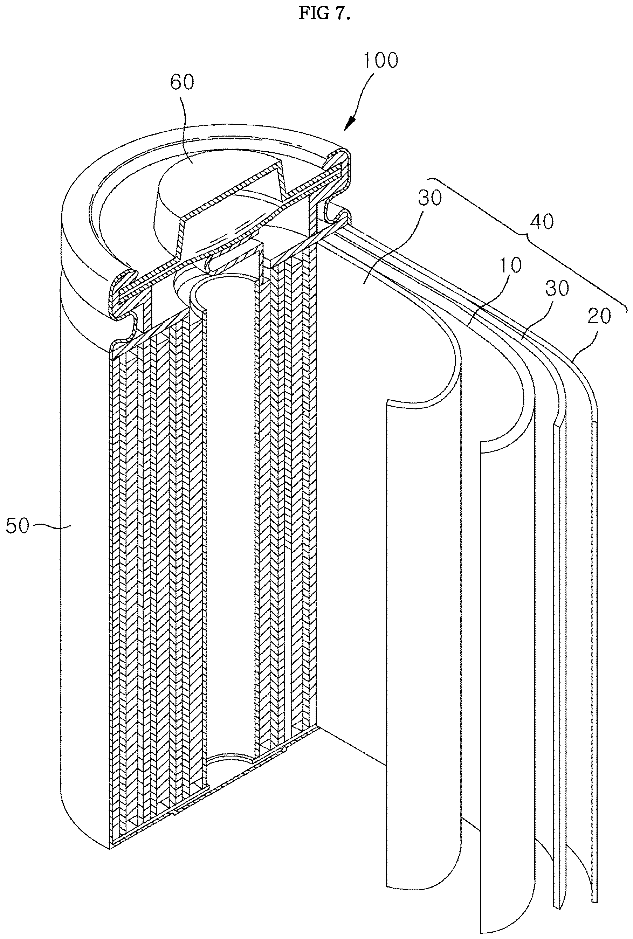

FIGS. 7 to 10 are each a schematic cross-sectional view of a rechargeable lithium battery according to one or more embodiments of the present disclosure.

## DETAILED DESCRIPTION

Hereinafter, one or more embodiments of the present disclosure will be described in detail with reference to the accompanying drawings. However, these are provided by way of example, and the present disclosure is not limited thereby and is only defined by the scope of the appended claims and equivalents thereof.

Unless specifically stated otherwise in this disclosure, when a portion of a layer, film, region, plate, and/or the like is referred to as being "on" another portion, this may include not only embodiments in which the portion is "directly on" the another portion but also embodiments in which there are one or more intervening portions interposed therebetween. In contrast, when a part such as a layer, a film, an area, or a plate is described as being "directly on" another part, there is no intervening part present therebetween.

Unless specifically stated otherwise in this disclosure, singular expressions may include plural expressions. For example, the singular forms "a," "an," "one," and "the" are intended to include the plural forms as well, unless the context clearly indicates otherwise. Also, unless specifically stated otherwise, "A or B," or "A and/or B" or "A/B" may refer to "including A, including B, or including A and B." Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. Further, the utilization of "may" when describing embodiments of the present disclosure refers to "one or more embodiments of the present disclosure."

In this disclosure, a "combination thereof" may refer to a mixture, laminate, composite, copolymer, alloy, blend, and reaction product of constituents.

Unless otherwise defined in this disclosure, a particle diameter/size may be an average particle diameter/size. Also, a particle diameter/size refers to an average particle diameter/size (D50) corresponding to a cumulative volume of 50 vol% in a particle size distribution. An average particle diameter/size (D50) may be measured by a method widely known in the art, for example, using a particle size analyzer, a transmission electron micrograph (TEM), or a scanning electron micrograph (SEM). In one or more embodiments, an average particle diameter/size (D50) may be obtained by performing measurement with a measuring instrument using a dynamic light scattering (DLS) method, analyzing data to count the number of particles for each particle size range, and calculating an average particle diameter/size from the result.

In one or more embodiments, measurement may be made using a laser diffraction method. For example, when measurement is made using a laser diffraction method, particles to be measured are dispersed in a dispersion medium and then irradiated with ultrasound having a frequency of about 28 kHz at an output of 60 W using a commercially available laser diffraction particle diameter measuring instrument (e.g., MT 3000 commercially available from Microtrac), and an average particle diameter/size (D50) corresponding to 50 volume% in the particle diameter distribution in the measuring instrument is calculated. In the present disclosure, D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter" indicates a particle diameter or an average particle diameter, and when the particles are non-spherical, the "diameter" indicates a major axis length or an average major axis length.

In this disclosure, an "inclination angle" refers to the angle at which a negative electrode active material in a negative electrode active material layer is inclined based on (e.g., relative to) a current collector set as 0°, for example relative to a surface of the current collector on which the negative electrode active material layer is formed, the surface being a reference plane set as 0°. The inclination angle may be measured by a method to be described below.

In this disclosure, "porosity" refers to the proportion of pore area in any cross section of a negative electrode active material layer (i.e., a proportion of the total pore area in any cross-sectional area of a negative electrode active material layer). The porosity may be measured by a method to be described below.

According to a first aspect of the present invention there is provided a negative electrode for a rechargeable lithium battery, the negative electrode including: a current collector; and a negative electrode active material layer on (e.g., formed on) at least one surface of the current collector, wherein the negative electrode active material layer includes a first negative electrode active material layer and a second negative electrode active material layer, which are sequentially arranged on the current collector (e.g., the first negative electrode active material layer is arranged between the current collector and the second negative electrode active material layer), and satisfies Expression 1:

## Expression 1

Average inclination angle of first negative electrode active material layer < Average

inclination angle of second negative electrode active material layer

Expression 1 may be a criterion for determining whether the negative electrode active material layer is capable of providing high adhesion to the current collector and a fast-charging effect at the same time. If (e.g., when) different negative electrode active material layers are stacked on the current collector, the negative electrode active material layer may provide high adhesion to the current collector and a fast-charging effect at the same time by satisfying Expression 1. In one or more embodiments, the first negative electrode active material layer may provide high adhesion to the current collector, and the second negative electrode active material layer may provide a fast-charging effect.

According to one or more embodiments, an average inclination angle of the second negative electrode active material layer and an average inclination angle of the first negative electrode active material layer may differ by about 2° or more, for example, about 2° to about 10°, about 2° to about 7°, about 3° to about 7°, or about 4.5° to about 7°. Within the above range, a fast-charging effect and an effect of improving adhesion to the current collector may be provided, and the first negative electrode active material layer and the second negative electrode active material layer may be easily manufactured at the same time.

According to one or more embodiments, the second negative electrode active material layer may have an average inclination angle of about 35° or more, for example, about 35° to about 45°, about 35° to about 40°, or about 37° to about 40°. Within the above range, it may be easy to satisfy Expression 1, a fast-charging effect may be further increased, and the second negative electrode active material layer may be easily manufactured.

According to one or more embodiments, the first negative electrode active material layer may have an average inclination angle of about 30° or more, for example, about 30° to about 40° or about 30° to about 35°. Within the above range, it may be easy to satisfy Expression 1, and adhesion to the current collector may be increased.

In one or more embodiments, the negative electrode active material layer may further satisfy Expression 2 below. Although there may be certain embodiments in which Expression 1 is satisfied and Expression 2 is not satisfied, the fast-charging effect and the adhesion improvement effect may be increased by the negative electrode active material layer satisfying both Expression 1 and Expression 2.

## Expression 2

Porosity of first negative electrode active material layer < Porosity of second negative

electrode active material layer

According to one or more embodiments, the porosity of the second negative electrode active material layer and the porosity of the first negative electrode active material layer may differ by about 3% or more, for example, about 3% to about 10%, about 3% to about 8%, or about 6 to about 8%. Within the above range, battery characteristics of the negative electrode may also be improved.

According to one or more embodiments, the second negative electrode active material layer may have a porosity of about 15% or more, for example, about 15% to about 25%, about 15% to about 20%, or about 17 to about 20%. Within the above range, the second negative electrode active material layer may be easily manufactured.

According to one or more embodiments, the first negative electrode active material layer may have a porosity of about 10% or more, for example, about 10% to about 20% or about 10% to about 15%. Within the above range, the first negative electrode active material layer may be easily manufactured.

According to one or more embodiments, the first negative electrode active material layer may be directly formed on the current collector, and the second negative electrode active material layer may be directly formed on the first negative electrode active material layer. Here, "directly formed" means that no other layer, for example, a negative electrode active material layer, is interposed between the current collector and the first negative electrode active material layer and between the first negative electrode active material layer and the second negative electrode active material layer. In other words, there is no intervening layer interposed between the current collector and the first negative electrode active material layer and between the first negative electrode active material layer and the second negative electrode active material layer.

In the negative electrode, a total thickness of the first negative electrode active material layer may be about 80 micrometers ($\mu$m) to about 800 $\mu$m. The total thickness of the first negative electrode active material layer may be about 80% or less, for example, about 20% to about 80% of a total thickness of the negative electrode active material layer. When the thickness proportion of the first negative electrode active material layer falls within the above range, not only electrolyte impregnability but also electron transfer of the active material layer in the negative electrode may be improved.

In the negative electrode, a total thickness of the second negative electrode active material layer may be about 20 $\mu$m to about 200 $\mu$m. When the thickness of the second negative electrode active material layer falls within the above range, it is advantageous for impregnation of the negative electrode with an electrolyte, and thus the transfer of ions in the negative electrode may be increased. The total thickness of the second negative electrode active material layer may be about 20% or more, for example, about 20% to about 80% of the total thickness of the negative electrode active material layer. Within the above range, not only electrolyte impregnability but also electron transfer of the active material layer in the negative electrode may be improved.

The total thickness of the negative electrode active material layer, that is, the sum of the total thickness of the first negative electrode active material layer and the total thickness of the second negative electrode active material layer, may be about 100 $\mu$m to about 1000 $\mu$m. As described above, the negative electrode active material layer according to one or more embodiments may be formed to have a maximum thickness of 1000 $\mu$m, and this thickness is much higher than the maximum thickness (200 $\mu$m) of a typical negative electrode active material layer. In one or more embodiments, since the degree of divergence (DD) (calculated by Expression 3 - see below) of the first negative electrode active material layer and the second negative electrode active material layer is adjusted to improve electrolyte impregnability, even when the negative electrode active material layer is formed as a thick layer as described above, fast charging and discharging may be effectively performed, and accordingly, it may be usefully applied to high-output batteries. According to one or more embodiments, the first negative electrode active material layer may have a DD of about 24 or more, and the second negative electrode active material layer may have a DD of about 24 or more.

## Expression 3

$$\text{Degree of divergence (DD)} = (I_a/I_{total}) * 100$$

In Expression 3,

$I_a$ is the sum of peak intensities at non-planar angles as measured by X-ray diffraction (XRD) using CuK$\alpha$ radiation, and

$I_{total}$ is the sum of peak intensities at all angles as measured by XRD using CuK$\alpha$ radiation.

According to one or more embodiments, the negative electrode includes: a current collector; and an upper negative electrode active material layer on (e.g., formed on) one surface of the current collector and a lower negative electrode active material layer on (e.g., formed on) the other surface of the current collector, and the upper negative electrode active material layer and the lower negative electrode active material layer may each satisfy Expression 1 and optionally further satisfy Expression 2. As used herein, the other surface of the current collector is a surface of the current collector opposite the one surface of the current collector.

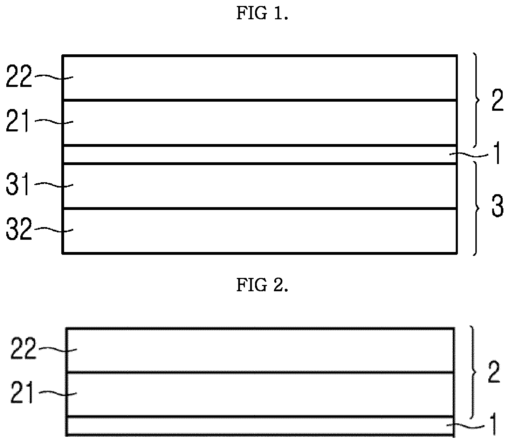

FIG. 1 is a schematic cross-sectional view of a negative electrode for a rechargeable lithium battery according to one or more embodiments of the present disclosure.

Referring to FIG. 1, a negative electrode includes a current collector 1, and an upper negative electrode active material layer 2 on (e.g., formed on) one surface of the current collector 1, and may also include a lower negative electrode active material layer 3 on (e.g., formed on) the other surface of the current collector 1.

The upper negative electrode active material layer 2 includes a first negative electrode active material layer 21 and a second negative electrode active material layer 22 which are sequentially formed on the current collector 1. The lower negative electrode active material layer 3 may include a first negative electrode active material layer 31 and a second negative electrode active material layer 32 which may be sequentially formed on the current collector 1.

The upper negative electrode active material layer 2 (and optionally also the lower negative electrode active material layer 3) satisfies Expression 1. The average inclination angles of the upper negative electrode active material layer 2 and the lower negative electrode active material layer 3 may be substantially the same or different.

In one or more embodiments, the upper negative electrode active material layer 2 and/or the lower negative electrode active material layer 3 may satisfy Expression 2, and the porosities thereof may be substantially the same or different.

According to one or more embodiments, the negative electrode includes: a current collector; and only an upper negative electrode active material layer on (e.g., formed on) one surface of the current collector, and the upper negative electrode active material layer may satisfy Expression 1 and optionally further satisfy Expression 2.

FIG. 2 is a schematic cross-sectional view of a negative electrode for a rechargeable lithium battery according to one or more embodiments of the present disclosure.

Referring to FIG. 2, a negative electrode includes a current collector 1 and only an upper negative electrode active material layer 2 formed on (e.g., on) one surface of the current collector 1.

The upper negative electrode active material layer 2 includes a first negative electrode active material layer 21 and a second negative electrode active material layer 22 which are sequentially formed on the current collector 1.

Hereinafter, the first negative electrode active material layer and the second negative electrode active material layer will be described in detail.

**First negative electrode active material layer**

The first negative electrode active material layer may include a carbon-based negative electrode active material (e.g., in a form of particles). The carbon-based negative electrode active material may suitably satisfy Expression 1 and Expression 2. In one or more embodiments, the carbon-based negative electrode active material may include one or more selected from among natural graphite and artificial graphite.

The natural graphite is a crystalline carbon-based material, and since the crystallographic characteristics of graphite particles are further developed compared to an amorphous carbon-based active material, the orientation characteristics of the carbon material within the electrode plate with respect to an external magnetic field may be further improved. Because the natural graphite is relatively soft compared to artificial graphite, if (e.g., when) the first negative electrode active material layer and the second negative electrode active material layer are formed at the same time, it may be advantageous for attaining a lower inclination angle and lower porosity.

The natural graphite may have any shape such as an irregular shape, a plate shape, a flake shape, a spherical shape, a fibrous shape, or a combination thereof. In one or more embodiments, the natural graphite may have a spherical shape. Spherical natural graphite may easily attain the above-described average inclination angle and porosity.

The natural graphite may have a higher pellet density than the artificial graphite. This pellet density may further increase the adhesion of the first negative electrode active material layer to the current collector. The pellet density may be about 1.5 to about 2.5 g/cc, for example, about 1.5 to about 2.0 g/cc or about 1.6 to about 2.0 g/cc. Within the above range, the above-described average inclination angle and porosity may be easily attained.

The artificial graphite may have any shape such as an irregular shape, a plate shape, a flake shape, a spherical shape, a fibrous shape, or a combination thereof. In one or more embodiments, the artificial graphite may have a plate shape. The artificial graphite in a plate shape may easily attain the above-described average inclination angle and porosity.

The artificial graphite may have a lower pellet density than the natural graphite. This pellet density is advantageous for securing surface pores in the negative electrode active material layer compared to natural graphite, and thus a fast-charging effect may be increased. For example, the artificial graphite may have a pellet density of about 1.0 to about 2.0 g/cc, for example, about 1.0 to about 1.8/cc. Within the above range, the above-described inclination angle and porosity may be easily attained.

In this disclosure, the term "pellet density" refers to the density of a pellet manufactured by inputting 1 g of a negative electrode active material into a mold and pressing the same while maintaining a pressure of 2 tons for 30 seconds.

The artificial graphite may be included in a smaller amount than the natural graphite. Because the pellet density of the natural graphite is higher than the pellet density of the artificial graphite, the artificial graphite needs to be included in a smaller amount than the natural graphite so that the average inclination angle and porosity of the first negative electrode active material layer may be relatively lowered.

According to one or more embodiments, the first negative electrode active material layer includes a negative electrode active material, and the negative electrode active material may include a mixture of about 60 wt% to 100 wt% natural graphite and 0 wt% to about 40 wt% artificial graphite, based on a total weight of 100 wt% of the negative electrode active material.

According to one or more embodiments, the mixture may include the natural graphite in an amount of 100 wt% and the artificial graphite in an amount of 0 wt%.

According to one or more embodiments, the mixture may include the natural graphite in an amount of about 60 wt% or more and less than 100 wt%, for example, about 65 wt% to about 95 wt% or about 70 wt% to about 90 wt%, and the artificial graphite in an amount of more than 0 wt% and about 40 wt% or less, for example, about 5 wt% to about 35 wt% or about 10 wt% to about 30 wt%.

In one or more embodiments, the first negative electrode active material layer may further include at least one of an Si-based negative electrode active material (e.g., in a form of particles), an Sn-based negative electrode active material (e.g., in a form of particles), or a lithium vanadium oxide negative electrode active material (e.g., in a form of particles) in the mixture. When the first negative electrode active material layer further includes one or more of those listed above, that is, when the carbon-based negative electrode active material as a first negative electrode active material and one or more of the above-listed negative electrode active materials as a second negative electrode active material are included, a mixing ratio of the first negative electrode active material to the second negative electrode active material may be a weight ratio of 50:50 to 99:1.

The first negative electrode active material layer may further include one or more of a conductive material and a binder in addition to the negative electrode active material.

For example, in one or more embodiments, the first negative electrode active material layer may include about 90 wt% to about 99.5 wt% of the negative electrode active material, about 0.5 wt% to about 5 wt% of the binder, and 0 wt% to about 5 wt%, for example, about 0.1 wt% to about 5 wt% of the conductive material, based on a total weight of 100 wt% of the first negative electrode active material layer.

The binder serves to cohere negative electrode active material particles and adhere the negative electrode active material to the current collector. As the binder, a non-aqueous (e.g., water-insoluble) binder, an aqueous (e.g., water-soluble) binder, a dry binder, or a combination thereof may be used.

The non-aqueous binder may be polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the binder of the negative electrode, a cellulose-based compound capable of imparting viscosity may be further included. As the cellulose-based compound, a mixture of one or more of carboxymethyl cellulose, hydroxypropylmethyl cellulose, methyl cellulose, and an alkali metal salt thereof may be used. As the alkali metal, Na, K, or Li may be used.

The dry binder is a polymer material that allows fiberization, and may be, for example, polytetrafluoroethylene, polyvinylidene fluoride, a polyvinylidene fluoride-hexafluoropropylene copolymer, polyethylene oxide, or a combination thereof.

The conductive material (e.g., electrically conductive material) is used to impart conductivity to an electrode, and any material may be used as long as it does not cause an undesirable chemical change in the battery and is an electronically conductive material. Non-limiting examples of the conductive material may include a carbon-based material such as natural graphite, artificial graphite, carbon black, acetylene black, Ketjen black, a carbon fiber, a carbon nanofiber, a carbon nanotube, and/or the like; a metal-based material that includes copper, nickel, aluminium, silver, and/or the like and is in the form of a metal powder or a metal fiber; a conductive polymer such as a polyphenylene derivative and/or the like; and a mixture thereof.

According to one or more embodiments, the first negative electrode active material layer may be a layer manufactured by applying a slurry for a first negative electrode active material layer on a current collector, drying the slurry to prepare a film for a first negative electrode active material layer, and rolling the film. In other words, the first negative electrode active material layer manufactured by rolling the film may satisfy Expression 1, and optionally Expression 2.

According to one or more embodiments, the first negative electrode active material layer may be a layer manufactured by applying a slurry for a first negative electrode active material layer on a current collector, drying the slurry to prepare a film for a first negative electrode active material layer, and rolling and vacuum drying the film. In other words, the first negative electrode active material layer manufactured by rolling and vacuum drying the film may satisfy Expression 1, and optionally Expression 2.

The average inclination angle and porosity of the first negative electrode active material layer may be implemented by adjusting the characteristics of the negative electrode active material included in the first negative electrode active material layer, such as the type and pellet density of negative electrode active material, the degree of rolling, and the orientation of a magnetic field to be described below. In one or more embodiments, when a slurry composition for a first negative electrode active material is applied, a magnetic field may be applied. This will be described in detail below.

**Second negative electrode active material layer**

The second negative electrode active material layer may include a carbon-based negative electrode active material (e.g., in a form of particles). The carbon-based negative electrode active material may suitably satisfy Expression 1 and Expression 2. The carbon-based negative electrode active material may include one or more selected from among natural graphite and artificial graphite.

The natural graphite and the artificial graphite may each have substantially the same configuration (e.g., pellet density, shape, and/or the like) as described for the first negative electrode active material layer.

According to one or more embodiments, the second negative electrode active material layer may include artificial graphite as the carbon-based negative electrode active material. The artificial graphite is a crystalline carbon-based material, and since crystallographic characteristics of graphite particles are further developed compared to an amorphous carbon-based active material, the orientation characteristics of the carbon material within the electrode plate with respect to an external magnetic field may be further improved. Because the artificial graphite is relatively hard compared to natural graphite, if (e.g., when) the first negative electrode active material layer and the second negative electrode active material layer are formed at the same time, it may be advantageous for attaining a higher inclination angle and higher porosity.

According to one or more embodiments, the second negative electrode active material layer includes a negative electrode active material, and the negative electrode active material may include a mixture of about 60 wt% to 100 wt% artificial graphite and 0 wt% to about 40 wt% natural graphite, based on a total weight of the negative electrode active material.

According to one or more embodiments, the mixture may include the artificial graphite in an amount of 100 wt% and the natural graphite in an amount of 0 wt%.

According to one or more embodiments, the mixture may include the artificial graphite in an amount of about 60 wt% or more and less than 100 wt%, for example, about 65 wt% to about 95 wt% or about 70 wt% to about 90 wt%, and the natural graphite in an amount of more than 0 wt% and about 40 wt% or less, for example, about 5 wt% to about 35 wt% or about 10 wt% to about 30 wt%. Within the above range, the above-described inclination angle and porosity may be easily attained.

In one or more embodiments, the second negative electrode active material layer may further include at least one of an Si-based negative electrode active material (e.g., in a form of particles), an Sn-based negative electrode active material (e.g., in a form of particles), or a lithium vanadium oxide negative electrode active material (e.g., in a form of particles). When the second negative electrode active material layer further includes one or more of those listed above, that is, when the carbon-based negative electrode active material as a first negative electrode active material and one or more of the above-listed negative electrode active materials as a second negative electrode active material are included, a mixing ratio of the first negative electrode active material to the second negative electrode active material may be a weight ratio of 50:50 to 99:1.

The second negative electrode active material layer may include the carbon-based negative electrode active material in an amount of about 90 wt% to about 99 wt%, for example, about 95 wt% to about 99 wt%, based on a total weight of 100 wt% of the second negative electrode active material layer.

The second negative electrode active material layer may further include one or more of a conductive material and a binder in addition to the carbon-based negative electrode active material.

For example, in one or more embodiments, the second negative electrode active material layer may include about 90 wt% to about 99.5 wt% of the negative electrode active material, about 0.5 wt% to about 5 wt% of the binder, and 0 wt% to about 5 wt% of the conductive material, based on the total weight of 100 wt% of the second negative electrode active material layer.

The binder and the conductive material are substantially the same as those described for the first negative electrode active material layer.

According to one or more embodiments, the second negative electrode active material layer may be a layer manufactured by applying a slurry for a second negative electrode active material layer on a current collector, drying the slurry to prepare a film for a second negative electrode active material layer, and rolling the film. In other words, the second negative electrode active material layer manufactured by rolling the film may satisfy Expression 1, and optionally Expression 2.

According to one or more embodiments, the second negative electrode active material layer may be a layer manufactured by applying a slurry for a second negative electrode active material layer on a current collector, drying the slurry to prepare a film for a second negative electrode active material layer, and rolling and vacuum drying the film. In other words, the second negative electrode active material layer manufactured by rolling and vacuum drying the film may satisfy Expression 1, and optionally Expression 2.

The average inclination angle and porosity of the second negative electrode active material layer may be implemented by adjusting the characteristics of the negative electrode active material included in the second negative electrode active material layer, such as the type and pellet density of negative electrode active material, the degree of rolling, and the orientation of a magnetic field to be described below. In one or more embodiments, when a slurry composition for a second negative electrode active material is applied, a magnetic field may be applied. This will be described in detail below.

**Manufacture of first negative electrode active material layer and second negative electrode active material layer**

The first negative electrode active material layer may be formed by a method including a process of applying a magnetic field when a slurry for a first negative electrode active material layer is applied on a current collector. The second negative electrode active material layer may be formed by a method including a process of applying a magnetic field when a slurry for a second negative electrode active material layer is applied.

For example, in one or more embodiments, a current collector is located under a magnet, and then a slurry for a first negative electrode active material layer is applied on the current collector. After the slurry for a first negative electrode active material layer is applied, the slurry is dried to form a first negative electrode active material layer. Subsequently, a slurry for a second negative electrode active material layer including a negative electrode active material is applied on the first negative electrode active material layer and dried to form a second negative electrode active material layer.

The first negative electrode active material layer and the second negative electrode active material layer may be formed by applying the slurry for a first negative electrode active material layer and the slurry for a second negative electrode active material layer, respectively. In this regard, a drying process is performed while the slurry for a first negative electrode active material layer and the slurry for a second negative electrode active material layer are applied. Accordingly, since the slurry for a first negative electrode active material layer and the slurry for a second negative electrode active material layer are dried while being applied, the first negative electrode active material layer and the second negative electrode active material layer may be formed as separate layers rather than a single layer with no boundary.

In one or more embodiments, when the slurry for a first negative electrode active material layer is applied on both surfaces of a current collector, and then the slurry for a second negative electrode active material layer is applied thereon, a process of forming a first negative electrode active material layer on one surface of the current collector, forming a first negative electrode active material layer on the other surface of the current collector, which is opposite to the surface on which the first negative electrode active material layer is formed, and forming a second negative electrode active material layer on each of the two first negative electrode active material layers may be performed. In one or more embodiments, a process of sequentially forming a first negative electrode active material layer and a second negative electrode active material layer on one surface of a current collector and then sequentially forming a first negative electrode active material layer and a second negative electrode active material layer on the other surface of the current collector may be performed.

The strength of the magnetic field due to the magnet may be about 1,000 Gauss to about 10,000 Gauss. Also, after being applied on a current collector, a slurry for a negative electrode active material layer may be maintained for about 1 second to about 9 seconds, that is, may be exposed to a magnetic field for about 1 second to about 9 seconds.

Due to the application of a magnetic field, particularly when the coating process is performed while the current collector moves, the magnetic field (magnetic flux) is formed in a direction perpendicular to the current collector by the magnet, but the actual direction in which the magnetic field is formed according to a coating speed (current collector movement speed) is formed at a constant angle as a vector function. Therefore, the negative electrode active material included in the slurry for a first negative electrode active material layer and the negative electrode active material included the slurry for a second negative electrode active material layer may be inclined at a respective constant angle based on the current collector surface, that is, may be oriented.

In this regard, in the case of the negative electrode active material layer, a ratio of peak intensities of the (002) plane to the (110) plane in the XRD pattern may be about 200 or more, for example, about 200 to about 300.

In one or more embodiments, the drying may include vacuum drying. Vacuum drying may be performed at a pressure of about 0.03 atm to about 0.06 atm and a temperature of about 100 °C to about 160 °C.

The first negative electrode active material layer and the second negative electrode active material layer may be manufactured by rolling after drying.

The rolling may affect the average inclination angle and porosity of each of the first negative electrode active material layer and the second negative electrode active material layer. The rolling may be performed under conditions suitable in the art. Within the above range, the above-described average inclination angle and porosity may be easily attained.

FIG. 3A shows an example of the inclination angles of a first negative electrode active material layer and a second negative electrode active material layer in the upper negative electrode active material layer of FIG. 1 before rolling according to one or more embodiments. FIG. 3B shows an example of the inclination angles of a first negative electrode active material layer and a second negative electrode active material layer in the upper negative electrode active material layer of FIG. 1 after rolling according to one or more embodiments.

Referring to FIG. 3A and FIG. 3B, it can be seen that the tendencies of inclination angles before and after rolling are different.

FIG. 4A shows another example of the inclination angles of a first negative electrode active material layer and a second negative electrode active material layer in the lower negative electrode active material layer of FIG. 1 before rolling according to one or more embodiments. FIG. 4B shows another example of the inclination angles of a first negative electrode active material layer and a second negative electrode active material layer in the lower negative electrode active material layer of FIG. 1 after rolling according to one or more embodiments.

Referring to FIG. 4A and FIG. 4B, it can be seen that the tendencies of inclination angles before and after rolling are different.

FIG. 5 shows the change in porosity of a first negative electrode active material layer (I) and a second negative electrode active material layer (II) in the upper negative electrode active material layer of FIG. 1 before (black bars) and after (white bars) rolling according to one or more embodiments. FIG. 6 shows the change in porosity of a first negative electrode active material layer (I) and a second negative electrode active material layer (II) in the lower negative electrode active material layer of FIG. 1 before (black bars) and after (white bars) rolling according to one or more embodiments.

Referring to FIG. 5 and FIG. 6, it can be seen that the tendencies of porosities before (black bars) and after (white bars) rolling are different.

**Current collector**

The current collector may be selected from copper foil, nickel foil, stainless steel foil, titanium foil, nickel foam, copper foam, a polymer substrate coated with a conductive metal, and a combination thereof.

According to the second aspect of the present invention, a rechargeable lithium battery includes the negative electrode for a rechargeable lithium battery according to one or more embodiments and a positive electrode for a rechargeable lithium battery.

Since the negative electrode for a rechargeable lithium battery has been described above, a detailed description thereof is not repeated for conciseness.

**Positive electrode**

The positive electrode for a rechargeable lithium battery may include a positive electrode current collector and a positive electrode active material layer on the positive electrode current collector. The positive electrode active material layer may include a positive electrode active material (e.g., in a form of particles) and may further include a binder and/or a conductive material (e.g., electrically conductive material).

In one or more embodiments, the positive electrode may further include an additive that may serve as a sacrificial positive electrode.

An amount of the positive electrode active material may be about 90 wt% to about 99.5 wt% based on a total weight of 100 wt% of the positive electrode active material layer. Amounts of the binder and the conductive material may each be about 0.5 wt% to about 5 wt%, based on the total weight of 100 wt% of the positive electrode active material layer.

In one or more embodiments, the positive electrode active material may include a compound (lithiated intercalation compound) that is capable of intercalating and deintercalating lithium. For example, in one or more embodiments, at least one of a composite oxide of lithium and a metal selected from cobalt, manganese, nickel, and combinations thereof may be used.

The composite oxide may be a lithium transition metal composite oxide. Non-limiting examples of the composite oxide may include a lithium nickel-based oxide, a lithium cobalt-based oxide, a lithium manganese-based oxide, a lithium iron phosphate-based compound, a cobalt-free nickel-manganese-based oxide, or a combination thereof.

In one or more embodiments, one or more compounds represented by any one selected from among the following Chemical Formulas may be used: $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the fore-going Chemical Formulas, A is nickel (Ni), cobalt (Co), manganese (Mn), or a combination thereof; X is aluminium (Al), Ni, Co, Mn, chromium (Cr), iron (Fe), magnesium (Mg), strontium (Sr), vanadium (V), a rare earth element, or a combination thereof; D is oxygen (O), fluorine (F), sulfur (S), phosphorus (P), or a combination thereof; G is Al, Cr, Mn, Fe, Mg, lanthanum (La), cerium (Ce), Sr, V, or a combination thereof; and $L^1$ is Mn, Al, or a combination thereof.

In one or more embodiments, the positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of a total metal excluding lithium in the lithium transition metal composite oxide. The high-nickel-based positive electrode active material may be capable of realizing high capacity and can be applied to a high-capacity, high-density rechargeable lithium battery.

The binder serves to attach the positive electrode active material particles well to each other and also to attach the positive electrode active material well to the positive electrode current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons may be used in the battery. Non-limiting examples of the conductive material may include a carbon-based material such as natural graphite, artificial graphite, carbon black, acetylene black, Ketjen black, a carbon fiber, a carbon nanofiber, and/or carbon nanotube; a metal-based material containing copper, nickel, aluminium, silver, etc., in a form of a metal powder or a metal fiber; a conductive polymer such as a polyphenylene derivative; or a mixture thereof.

In one or more embodiments, Al may be used as the positive electrode current collector, but embodiments of the present disclosure are not limited thereto.

The rechargeable lithium battery may further include an electrolyte solution.

**Electrolyte Solution**

The electrolyte solution for a rechargeable lithium battery may include a non-aqueous organic solvent and a lithium salt.

The non-aqueous organic solvent may serve as a medium for transmitting ions that take part in an electrochemical reaction of the rechargeable lithium battery.

The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, an ether bond), and/or the like; amides such as dimethylformamide; dioxolanes such as 1,3-dioxolane, 1,4-dioxolane, and/or the like; sulfolanes; and/or the like.

The non-aqueous organic solvents may be used alone or in combination of two or more thereof.

In one or more embodiments, when a carbonate-based solvent is used, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in the rechargeable lithium battery, enables a basic operation of the rechargeable lithium battery, and improves transportation of the lithium ions between positive and negative electrodes. Non-limiting examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are each an integer of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

The rechargeable lithium battery may further include a separator.

**Separator**

Depending on the type of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, or a combination thereof on one or both surfaces of the porous substrate.

The porous substrate may be a polymer film formed of any one selected from among polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but embodiments of the present disclosure are not limited thereto.

The organic material and the inorganic material may be mixed in one coating layer, or a coating layer including an organic material and a coating layer including an inorganic material may be stacked.

**Rechargeable Lithium Battery**

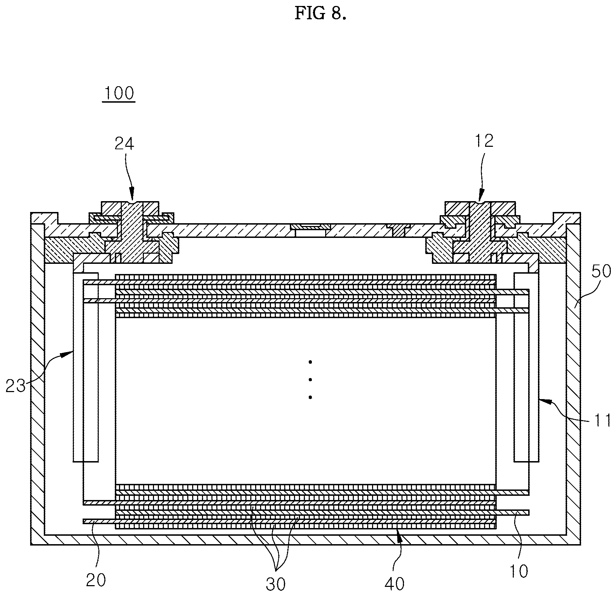

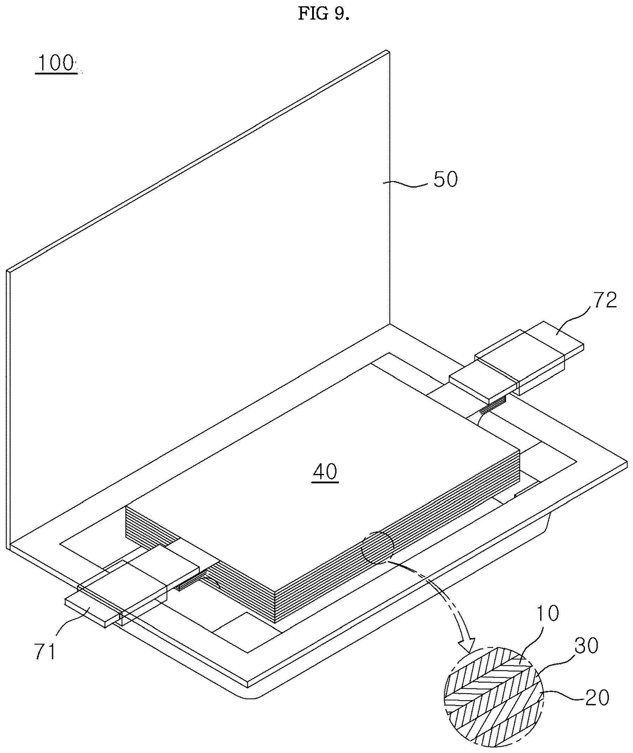

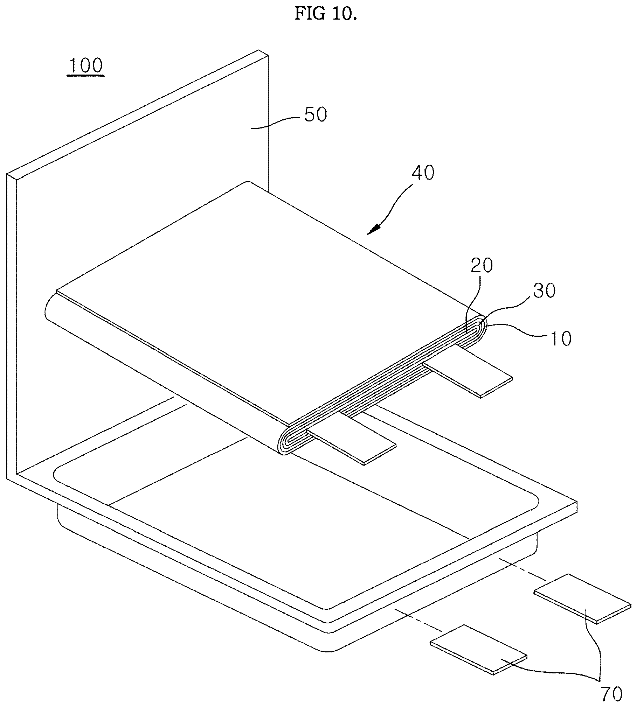

The rechargeable lithium battery may be classified into a cylindrical, prismatic, pouch, or coin-type battery, and/or the like, depending on a shape thereof. FIGS. 7 to 10 are each a schematic view illustrating a rechargeable lithium battery according to one or more embodiments of the present disclosure. FIG. 7 shows a cylindrical battery, FIG. 8 shows a prismatic battery, and FIGS. 9 and 10 show pouch-type batteries. Referring to FIGS. 7 to 10, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. In one or more embodiments, the rechargeable lithium battery 100 may include a sealing member 60 sealing the case 50, as shown in FIG. 7. In one or more embodiments, as shown in FIG. 8, the rechargeable lithium battery 100 may include a positive lead tab 11, a positive terminal 12, a negative lead tab 23, and a negative terminal 24. In one or more embodiments, as shown in FIGS. 9 and 10, the rechargeable lithium battery 100 may include an electrode tab 70, which may be, for example, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or various types of electric devices, as non-limiting examples.

Hereinafter, examples and a comparative example of the present disclosure will be described. The following examples are given for the purpose of illustration only and are not intended to limit the scope of the present disclosure.

**Example 1:**

75 wt% of natural graphite (with a spherical shape and a pellet density of 1.7 g/cc), 22.5 wt% of artificial graphite (with a plate shape and a pellet density of 1.5 g/cc), 1.7 wt% of styrene butadiene rubber, and 0.8 wt% of carboxymethyl cellulose were mixed in water to prepare a slurry for a first negative electrode active material layer.

75 wt% of artificial graphite (with a plate shape and a pellet density of 1.5 g/cc), 22.5 wt% of natural graphite (with a spherical shape and a pellet density of 1.7 g/cc), 1.7 wt% of styrene butadiene rubber, and 0.8 wt% of carboxymethyl cellulose were mixed in water to prepare a slurry for a second negative electrode active material layer.

Copper foil was located under a magnet with a magnetic field strength of 5000 Gauss, and while the copper foil was moved, the slurry for a first negative electrode active material layer and the slurry for a second negative electrode active material layer were simultaneously applied on one surface of the copper foil and then dried to perform single-sided coating. For example, the slurry for a first negative electrode active material layer was applied on one surface of the copper foil, and the slurry for a second negative electrode active material layer was sequentially applied thereon, and then dried to perform single-sided coating.

Subsequently, the slurry for a first negative electrode active material layer and the slurry for a second negative electrode active material layer were sequentially applied on the other surface of the copper foil in the same manner as described above and then dried to perform single-sided coating.

The resulting copper foil was subjected to a rolling process using a roller to manufacture a negative electrode in which a first negative electrode active material layer (including 75 wt% natural graphite and 22.5 wt% artificial graphite) and a second negative electrode active material layer (including 75 wt% artificial graphite and 22.5 wt% natural graphite) were sequentially formed on one surface of the copper foil, and a first negative electrode active material layer (including 75 wt% natural graphite and 22.5 wt% artificial graphite) and a second negative electrode active material layer (including 75 wt% artificial graphite and 22.5 wt% natural graphite) were sequentially formed on the other surface of the copper foil.

96 wt% of $LiCoO_2$ as a positive electrode active material, 2 wt% of carbon black as a conductive material, and 2 wt% of polyvinylidene fluoride as a binder were mixed in an N-methyl pyrrolidone solvent to prepare a positive electrode active material slurry. The slurry was applied on an Al substrate, dried, and rolled to manufacture a positive electrode.

A full-cell 18650-type cylindrical rechargeable lithium battery having a battery capacity of 550 mAh and an areal capacity of 4.70 mAh/cm$^2$ was manufactured using the negative electrode, the positive electrode, and an electrolyte. As the electrolyte, a mixed solvent (50:50 volume ratio) of ethylene carbonate (EC) and diethyl carbonate (DEC), in which 1 M $LiPF_6$ was dissolved, was used.

**Example 2**

A negative electrode and a battery were manufactured in substantially the same manner as in Example 1, except that the amounts of natural graphite and artificial graphite in the first negative electrode active material layer were changed to 86 wt% and 11.5 wt%, respectively, and the amounts of natural graphite and artificial graphite in the second negative electrode active material layer were changed to 11.5 wt% and 86 wt%, respectively.

**Example 3**

A negative electrode and a battery were manufactured in substantially the same manner as in Example 1, except that the amounts of natural graphite and artificial graphite in the first negative electrode active material layer were changed to 97.5 wt% and 0 wt%, respectively, and the amounts of natural graphite and artificial graphite in the second negative electrode active material layer were changed to 0 wt% and 97.5 wt%, respectively.

**Comparative Example 1**

A negative electrode and a battery were manufactured in substantially the same manner as in Example 1, except that the amounts of natural graphite and artificial graphite in the first negative electrode active material layer were changed to 48.75 wt% and 48.75 wt%, respectively, and the amounts of natural graphite and artificial graphite in the second negative electrode active material layer were changed to 48.75 wt% and 48.75 wt%, respectively.

The average inclination angle and porosity of each of the manufactured negative electrodes were measured.

(1) Inclination angle: The cross-sectional SEM image of the negative electrode plate was measured and confirmed using Image J software (commercially available). The cross-sectional SEM image of the electrode plate was loaded into the Image J software, a region for measuring an inclination angle was selected, the degree of inclination of pores in the cross section of the electrode plate in the selected region (the angle at which pores were inclined when the angle of the current collector was set to 0° is (e.g., =) the inclination angle of the negative electrode active material) was measured, and an average inclination angle was calculated. The average inclination angle may be confirmed through the Image J software.

(2) Porosity: The cross-sectional SEM image of the negative electrode plate was measured and confirmed using Image J software (commercially available). The cross-sectional SEM image of the electrode plate was loaded into the Image J software, a region for measuring porosity was selected, and a ratio of the area of pores in the selected region relative to the total area of the selected region was measured to determine porosity. The porosity may be confirmed through the Image J software.

The adhesion and fast charging effect of each of the manufactured batteries were evaluated.

(3) Adhesion (units: gf/25 mm): Tape was attached to slide glass for measuring adhesion, and then the electrode plate to be measured was attached thereto. Afterward, air bubbles between the slide glass and the tape were removed by pressing the attached surface, and the electrode plate and the tape were brought to come into close contact using a roller to prepare a sample. Then, 90° adhesion was measured three times using adhesion measuring equipment, and an average value was calculated.

(4) Fast charging effect (units: $\Omega$): A symmetric cell was manufactured, and then the ionic resistance of the electrode plate was calculated by electrochemical impedance spectroscopy (EIS) measurement to predict fast performance. The lower the ionic resistance, the better the performance at a high C-rate.

Table 1

| | | Example 1 | | Example 2 | | Example 3 | | Comparative Example 1 | |
|---|---|---|---|---|---|---|---|---|---|
| | | Before rolling | After rolling | Before rolling | After rolling | Before rolling | After rolling | Before rolling | After rolling |
| Average inclination angle | Second negative electrode active material layer | 39.8 | 37.5 | 39.2 | 38.1 | 39.5 | 38.7 | 40.8 | 35.5 |
| | First negative electrode active material layer | 38.5 | 34.6 | 38.6 | 34.1 | 39.0 | 33.5 | 40.5 | 35.7 |
| Porosity | Second negative electrode active material layer | 23.1% | 16.6% | 23.3% | 17.1% | 23.2% | 17.9% | 24.0% | 13.4% |
| | First negative electrode active material layer | 23.2% | 11.8% | 23.0% | 11.5% | 23.1% | 10.7% | 24.3% | 13.7% |
| Adhesion | | - | 3.75 | - | 3.87 | - | 4.13 | - | 2.7 |
| Fast charging (ionic resistance) | | - | 19.9 | - | 19.3 | - | 18.5 | - | 21 |

As shown in Table 1, each of the negative electrodes of the examples exhibits excellent adhesion to the current collector and provide excellent fast charging performance.

However, the negative electrode of the comparative example, which did not satisfy Expression 1 of the present disclosure, exhibited low adhesion and a low fast charging effect compared to the examples.

As used herein, the term "Group" as utilized herein refers to a group of the Periodic Table of Elements according to the 1 to 18 grouping system of the International Union of Pure and Applied Chemistry ("IUPAC").

**[0146]** [00175] In the present disclosure, it will be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Additionally, the terms "comprise(s)/comprising," "include(s)/including," "have/has/having", or other similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value. Also, it should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery (e.g., a dry electrode) manufacturing device, a battery pack, a battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Example embodiments of the present disclosure have been described, but the present disclosure is not limited thereto. Various other modifications may be carried out within the scope of the appended claims, the detailed description of the present disclosure and the accompanying drawings are also included in the scope of the present disclosure. Therefore, the technical scope of the present disclosure is not to be limited to the content stated in the detailed description of the disclosure, but should be determined by the appended claims and equivalents thereof.

### Reference Numerals

| 100: | Rechargeable lithium battery | 10: | Positive electrode |
|------|------------------------------|-----|--------------------|
| 11: | Positive electrode lead tab | 12: | Positive electrode terminal |
| 20: | Negative electrode | 21: | Negative electrode lead tab |
| 22: | Negative electrode terminal | 30: | Separator |
| 40: | Electrode assembly | 50: | Case |
| 60: | Sealing member | 70: | Electrode tab |
| 71: | Positive electrode tab | 72: | Negative electrode tab |

**Claims**

1. A negative electrode for a rechargeable lithium battery, the negative electrode comprising:

   a current collector; and
   a negative electrode active material layer on at least one surface of the current collector,
   wherein the negative electrode active material layer comprises a first negative electrode active material layer and a second negative electrode active material layer, which are sequentially arranged on the current collector, and satisfies Expression 1:

   **Expression 1**

   Average inclination angle of first negative electrode active material layer < Average inclination angle of second negative electrode active material layer.

2. The negative electrode as claimed in claim 1, wherein the average inclination angle of the second negative electrode active material layer and the average inclination angle of the first negative electrode active material layer differ by 2° or more.

3. The negative electrode as claimed in claim 1 or claim 2, wherein the second negative electrode active material layer has an average inclination angle of 35° or more, and the first negative electrode active material layer has an average inclination angle of 30° or more.

4. The negative electrode as claimed in any preceding claim, wherein the negative electrode active material layer further satisfies Expression 2:

   Expression 2

   Porosity of first negative electrode active material layer < Porosity of second negative electrode active material layer.

5. The negative electrode as claimed in claim 4, wherein the porosity of the second negative electrode active material layer and the porosity of the first negative electrode active material layer differ by 3% or more.

6. The negative electrode as claimed in claim 4 or claim 5, wherein the second negative electrode active material layer has a porosity of 15% or more, and the first negative electrode active material layer has a porosity of 10% or more.

7. The negative electrode as claimed in any preceding claim, wherein the first negative electrode active material layer comprises a carbon-based negative electrode active material.

8. The negative electrode as claimed in claim 7, wherein the carbon-based negative electrode active material of the first negative electrode active material layer comprises a mixture of 60 wt% to 100 wt% natural graphite and 0 wt% to 40 wt% artificial graphite, based on a total weight of 100 wt% of the carbon-based negative electrode active material.

9. The negative electrode as claimed in claim 8, wherein the natural graphite has a pellet density of 1.5 to 2.5 g/cc, and the artificial graphite has a pellet density of 1.0 to 2.0 g/cc.

10. The negative electrode as claimed in claim 8 or claim 9, wherein the natural graphite has a spherical shape, and the artificial graphite has a plate shape.

11. The negative electrode as claimed in any preceding claim, wherein the second negative electrode active material layer comprises a carbon-based negative electrode active material.

12. The negative electrode as claimed in claim 11, wherein the carbon-based negative electrode active material of the second negative electrode active material layer comprises a mixture of 60 wt% to 100 wt% artificial graphite and 0 wt% to 40 wt% natural graphite, based a total weigh of 100 wt% of the carbon-based negative electrode active material.

13. The negative electrode as claimed in claim 12, wherein the natural graphite has a pellet density of 1.5 to 2.5 g/cc, and the artificial graphite has a pellet density of 1.0 to 2.0 g/cc.

14. The negative electrode as claimed in claim 12 or claim 13, wherein the natural graphite has a spherical shape, and the artificial graphite has a plate shape.

15. A rechargeable lithium battery, comprising the negative electrode as claimed in any one of claims 1 to 14, and a positive electrode.

FIG 1.

FIG 2.

FIG 3A.

FIG 3B.

FIG 4A.

FIG 4B.

FIG 5.

FIG 6.

FIG 7.

FIG 8.

FIG 9.

FIG 10.

Europäisches Patentamt

European Patent Office

Office européen des brevets

# EUROPEAN SEARCH REPORT

**Application Number**

EP 25 19 6931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 396 745 A2 (LG CHEMICAL LTD [KR]) 31 October 2018 (2018-10-31) * paragraphs [0012] - [0051], [0088] * ----- | 1-15 | INV. H01M4/133 H01M4/36 H01M4/587 |
| X | CN 113 728 461 A (SAMSUNG SDI CO LTD) 30 November 2021 (2021-11-30) * paragraphs [0009], [0021], [0022], [0044] - [0046]; claims 11-14; figures 2,3 * ----- | 1-7, 11-13,15 | H01M10/0525 H01M10/0585 H01M10/0587 H01M4/02 H01M4/1393 |
| X | EP 4 411 847 A1 (SAMSUNG SDI CO LTD [KR]) 7 August 2024 (2024-08-07) * Figure 2 and parts of the description referring to it * ----- | 1-7,11, 15 | |
| X | US 2023/187636 A1 (KORY MAX [CH] ET AL) 15 June 2023 (2023-06-15) * paragraphs [0034], [0037], [0038]; figure 2 * ----- | 1-7,11, 15 | |

**TECHNICAL FIELDS SEARCHED (IPC)**

H01M

The present search report has been drawn up for all claims

| Place of search | Date of completion of the search | Examiner |
|---|---|---|
| Munich | 9 January 2026 | Mugnaini, Veronica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 6931

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2026

| Patent document cited in search report | | Publication date | Patent family member(s) | | Publication date |
|---|---|---|---|---|---|
| EP 3396745 | A2 | 31-10-2018 | CN | 108701816 A | 23-10-2018 |
| | | | EP | 3396745 A2 | 31-10-2018 |
| | | | KR | 20180035693 A | 06-04-2018 |
| | | | US | 2019305308 A1 | 03-10-2019 |
| CN 113728461 | A | 30-11-2021 | CN | 113728461 A | 30-11-2021 |
| | | | EP | 3961758 A1 | 02-03-2022 |
| | | | JP | 7246521 B2 | 27-03-2023 |
| | | | JP | 2022530082 A | 27-06-2022 |
| | | | KR | 20200124513 A | 03-11-2020 |
| | | | US | 2022209217 A1 | 30-06-2022 |
| | | | WO | 2020218773 A1 | 29-10-2020 |
| EP 4411847 | A1 | 07-08-2024 | EP | 4411847 A1 | 07-08-2024 |
| | | | KR | 20240123164 A | 13-08-2024 |
| | | | US | 2024274802 A1 | 15-08-2024 |
| US 2023187636 | A1 | 15-06-2023 | DE | 102021133008 A1 | 15-06-2023 |
| | | | EP | 4449518 A1 | 23-10-2024 |
| | | | US | 2023187636 A1 | 15-06-2023 |
| | | | WO | 2023110666 A1 | 22-06-2023 |